# EUROPEAN PATENT APPLICATION

(11) **EP 2 680 155 A1**
(43) Date of publication of application: **01.01.2014**
(21) Application number: 12166454.4
(22) Date of filing: 02.05.2012
(51) Int. Cl.: G06F 13/38, H04L 12/54

(54) **Hybrid computing system**

(71) Applicant: Agora Tech Developments Ltd., Road Town, Tortola (VG)
(72) Inventor: Billi, Emilio, 28100 Novara (IT)
(74) Representative: OK pat AG

(57) **Abstract**

A hybrid computing system (100) comprising: a network fabric (8); at least one Root Complex board (RCB) and at least one Endpoint Board (EB). Each Root Complex board (RCB) comprises a first processor (1); a PCIe root complex (2) connected to the first processor (1); and a first PCIe network switch (4) directly connected to the PCIe root complex (2).Each Endpoint Board (EB) comprises a second processor (10); a PCIe interface (11) connected to the second processor (10); and a second PCIe network switch (16) connected to the PCIe interface (11). The PCIe network switches (4, 16) of each board (RCB, EB) are connected to the network fabric (8) wherein each Root Complex board (RCB) and each Endpoint Board (EB) are configured for simultaneous use within the hybrid computing system (100).

## Description

### FIELD OF THE INVENTION

The present invention relates to a scalable and reconfigurable highly efficient hybrid computing system comprising multiple boards interconnected by a network fabric.

### BACKGROUND OF THE INVENTION

Today's datacenters are basically a collection of standard servers interconnected with non optimized networks like Ethernet and 10 Gbit Ethernet or in some cases using Infiniband or exotic high performance interconnections. However these architectures are no optimized and modern literature shows that these architectures are inefficient in terms of power and computational efficiency.

Several approaches have been proposed to overcome these problems. A first approach has been the optimization in terms of network. However this solution is too complex and therefore too power demanding.

According to a second approach, described for example in US 2009/0216920, the underutilization of the server resources has been reduced by a solution where multiple hardware resources are shared between computing boards.

In addition CPU vendors are focusing on creating new low power CPUs (such as the Intel® Atom™ CPUs) but this approach alone - if not integrated with a more radical redesign of the server architecture - is not sufficient to address the power consumption of modern datacenters. In fact it is possible to demonstrate that using a very low power CPU in a standard datacenter can generate a worse power optimization than using high power CPUs in the same scenario. The solution described in US 2009/0216920 also uses low-power CPUs in an attempt to reduce power consumption. However, the solution described in this document has the major disadvantage that all boards must be identical. In fact many micro-server architectures are de facto a simple collection of CPUs interconnected with a more efficient interconnection but it is not possible to reconfigure the system to have CPUs and GPUs and DSPs and storage in the same time into the same architecture. Therefore this solution might be scalable but it is not flexible in terms of customization.

### TECHNICAL PROBLEM TO BE SOLVED

In a modern datacenter one will need the integration of different computational resources (not only CPU based but also GPU and DSP) and one will need a more efficient architecture in storage and data management at the hardware level. A datacenter needs a more complex mix of capabilities than what can be achieved with the known server architectures only as distributed in many different servers and interconnected together using different networks such as fiberchannel for storage, InfiniBand® or a mix of fiber channel and Ethernet and so on.

The objective of the present invention is thus to provide a scalable and at the same time highly configurable computing system with low power consumption.

### SUMMARY OF THE INVENTION

The above-identified objective of the invention is achieved by a hybrid computing system comprising a network fabric interconnecting multiple computing blades (at least one Root Complex board and at least one Endpoint Board). Each Root Complex board comprises a first processor, a PCIe root complex connected to the first processor and a first PCIe network switch directly connected to the PCIe root complex. Each Endpoint Board comprises a second processor, a PCIe interface connected to the second processor and a second PCIe network switch connected to the PCIe interface.

According to the present invention the PCIe network switch of each board is connected to the network fabric, wherein each Root Complex board and each Endpoint Board are configured for simultaneous use within the hybrid computing system, i.e. each processor on each board can be active at the same time.

### ADVANTAGEOUS EFFECTS

The present invention is thus a completely new concept of multiple computing boards ("micro-servers") with very high computational power density with the capability to integrate as modules storage cards, DSP coprocessors, GPUs modules, FPGAs modules and so on.

In view of the above-identified objective and its solution, the most important advantages of the present invention are:
- Configurability through modularity: since the hybrid computing system of the present invention can accommodate any combination of different types of boards, the resulting computing system can be customized to exactly fit the exact requirements;
- Integration: by custom configuration of different modules (Storage boards, DSP-Processors, FPGA modules, etc) a high level of integration can be achieved and in this way extremely optimized datacenters can be created in a single computing system;

- Low power usage: through integration and sharing of hardware resources - which used to require a full datacenter - down to a single computing system results in substantial reduction of the power usage. Furthermore, the optimization of the hardware layout results in additional savings in power consumption;
- Cost efficiency: since the computing system of the present invention can be configured to replace a broad range of servers, a significant cost-saving is achieved (in addition to costs savings due to reduced power consumption and physical space requirements); and
- Flexibility: due to the reconfigurable nature of the computing system of the present invention, the system is very flexible according to various usage scenarios. For example the computing system is fitted with preponderantly storage boards for a data-storage application, while the same system can be fitted with processor boards for data processing and calculation-intensive application. Again if a lower amount of traffic is expected, than a single IO-Board may be shared between all boards, while in a high traffic scenario, each board may be provided with a dedicated IO-Fabric.

For example, a five rack unit 5U rack-based server containing up to 32 boards that can be CPU based, GPU based, DPS based, or storage (HDD, SSD, etc) based is capable to replace an entire forty rack unit 40U cabinet of traditional commodity servers creating a new datacenter architecture, i.e. a real datacenter in a single chassis adding capabilities that normally can not be integrated into a standard server. These capabilities enable a power boost for the most demanding present and future applications starting from data-intensive applications to computing-intensive processing applications.

### BRIEF DESCRIPTION OF THE DRAWINGS

Further characteristics and advantages of the invention will in the following be described in detail by means of the description and by making reference to the drawings. Which show:
- Fig. 1A: a symbolic block diagram of the network fabric of the computing system according to the present invention;
- Fig. 1B: a perspective view of a backplane BK for receiving various boards connecting to the network fabric of the computing system according to the present invention;
- Fig. 1C: a top view of a backplane according to a particular embodiment of the present invention;
- Fig. 2A: a symbolic block diagram of a first configuration of the computing system according to the present invention;
- Fig. 2B: a perspective view of a first configuration of the computing system according to the present invention;
- Fig. 3: a symbolic block diagram of the communication path between the processor of one board and the IO-Fabric of a different board using remote PCIe memory mapping;
- Fig. 4: an illustrative diagram of a preferred implementation of non-transparent shared memory;
- Fig. 5: a perspective view of a particular configuration of the computing system according to the present invention, with emphasis on processing power;
- Fig. 6: a perspective view of a further particular configuration of the computing system according to the present invention, with emphasis on storage capacity;
- Fig. 7: a Root Complex Board with an x86 processor as first processor;
- Fig. 8: an Endpoint Board in a specific configuration of storage cards for SSD storage;
- Fig. 9: shows an FPGA-based Endpoint Board;
Note: The figures are not drawn to scale, are provided as illustration only and serve only for better understanding but not for defining the scope of the invention. No limitations of any features of the invention should be implied form these figures.

### DESCRIPTION OF PREFERRED EMBODIMENTS

Certain terms will be used in this patent application, the formulation of which should not be interpreted to be limited by the specific term chosen, but as to relate to the general concept behind the specific term.

The term "board" shall be used to refer to a computing board, comprising a motherboard (as well known in the art) carrying various hardware components such as computing, storage and/or IO-Components. The motherboard of the boards is fitted with appropriate interfaces to connect to the network fabric and the IO-components may comprise further interfaces of their own.

The term "processor" shall refer in the context of the present application to any kind of processor and/or controller from the non-exhaustive list below:
- a central processing unit (CPU) such as a microprocessor;
- a Field-programmable gate array (FPGA);
- an accelerator, such as a graphics processing unit (GPU);
- a Digital signal possessor (DSP);
- a physics processing unit (PPU);
- a front end processor,
- a memory controller;
- a drive controller such as solid-state drive (SSD) controller, a hard drive- controller or a disk array controller; or
- a network interface controller (NIC), such as an InfiniBand® controller.

PCI-SIG stands for Peripheral Component Interconnect Special Interest Group. The abbreviation PCI shall be used for Peripheral Component Interconnect and PCIe stands for PCI Express or Peripheral Component Interconnect Express as defined by the well-known international standards by PCI-SIG. The present invention is not limited to a single version of the PCIe standard or to any particular form factor thereof.

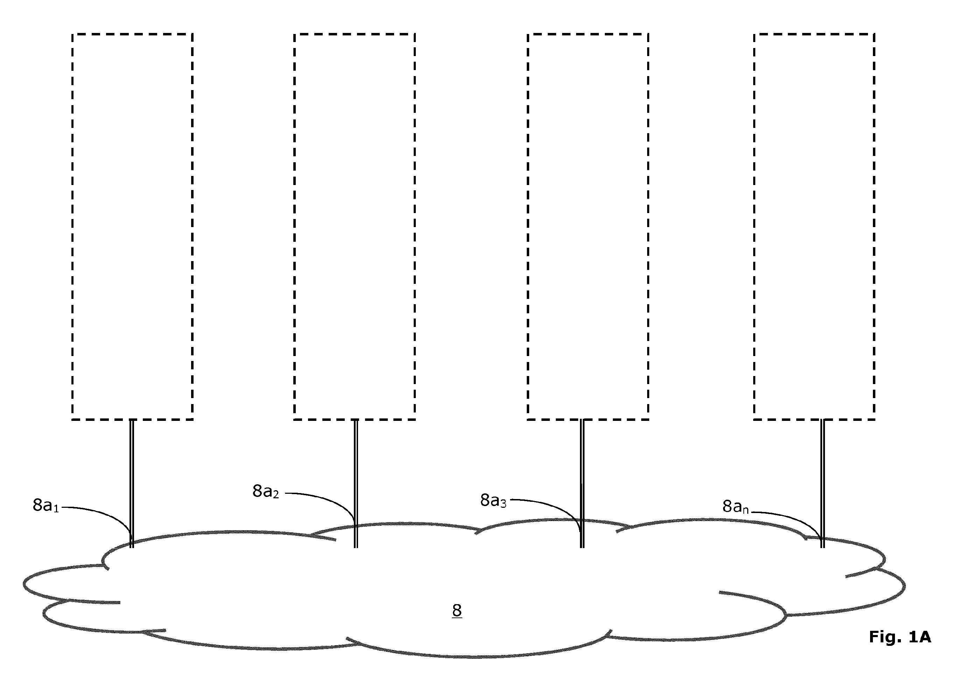

Fig. 1A shows a symbolic block diagram of the network fabric 8 of the computing system 100 according to the present invention. The network fabric 8 is a switched fabric according to a network topology where network nodes (in the present case boards) connect with each other via one or more network switches. Switched fabrics can offer better total throughput than broadcast networks, because traffic is spread across multiple physical links.

The network fabric 8 is a PCIe cluster of one of the following network topologies (non-exhaustive list):
- point-to-point;
- bus;
- sta r;
- ring, preferably a 3D torus;
- mesh; or
- tree.

In other words, the present invention uses a fabric attached I/O network which enables a high degree of flexibility in the computing system 100 by physically separating the provisioning, monitoring and management of I/O, like HDD, NIC and co-processors from the physical hosts and virtual machines VMs utilizing the I/O. This means that the I/O can be remotely assigned, managed and adjusted as required and on-demand without affecting other hardware assets (server, storage and networking), thus providing the computing system administrator increased flexibility to match resources to individual application workloads, improve application uptime and reduce management overhead, all in real time.

Once I/O becomes fabric-attached, the I/O can then be treated as a pool of resources from which an application workload can draw from, either as dedicated resources (where performance is essential) or shared resources (where cost reduction through better utilization is essential).

The underlying network may be one of Gigabit Ethernet or InfiniBand, the choice of any particular type not affecting the concept of the invention.

In a preferred embodiment of the present invention, the network fabric 9 comprises standard PCIe switches, preferably switches compliant with specification of PCI-SIG PCIw gen 2.1.

Figure 1A symbolically shows the n fabric ports 8a₁₋ₙ for connecting various boards (to be described later) with the network fabric. The term fabric port shall cover both logical (communication controller) and physical components (slot for receiving a computing board) of the ports required for attaching a computing board to the network fabric 8 or to a particular switch within the network fabric 8.

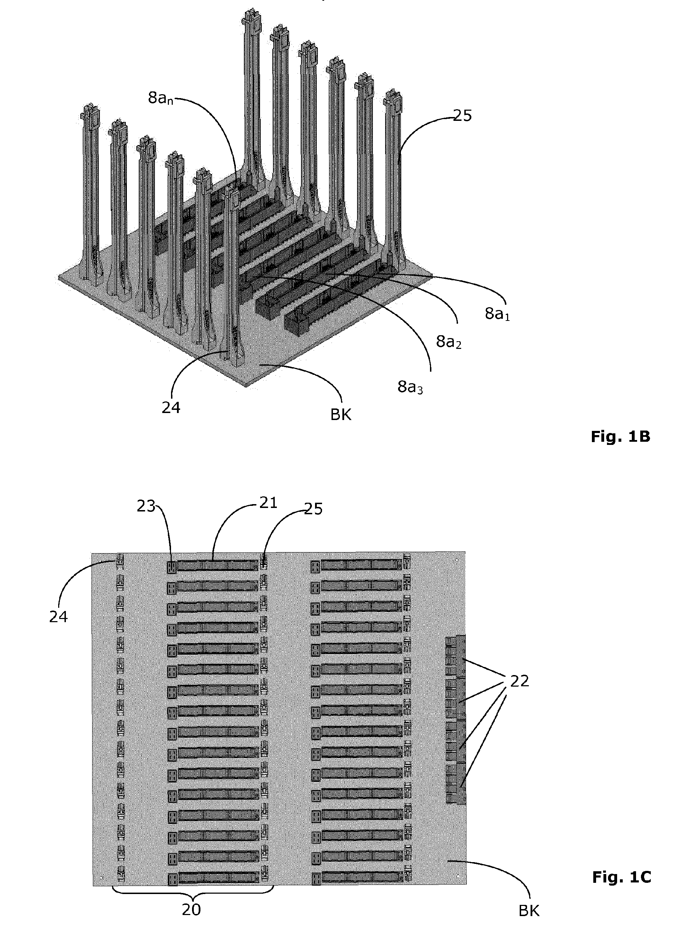

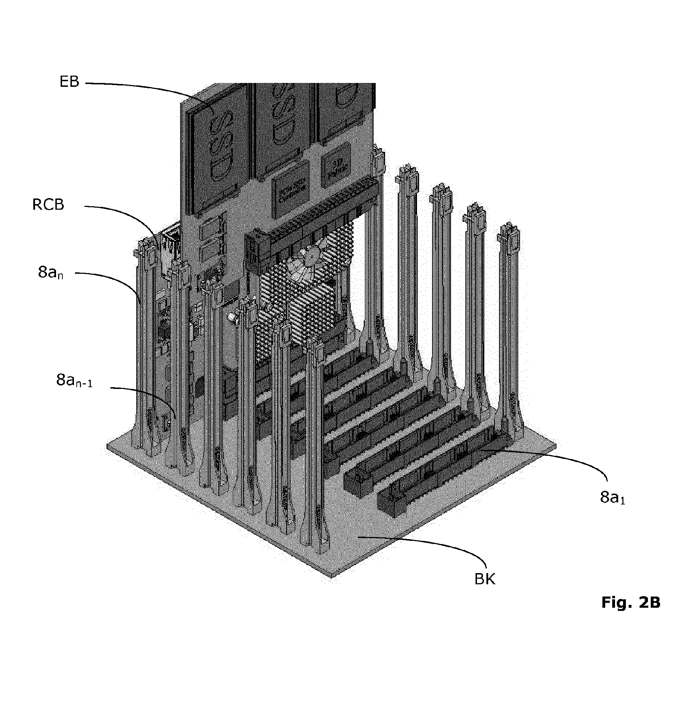

Fig. 1B shows a perspective view of the backplane BK for receiving various boards RCBs (Root Complex boards) or EBs (Endpoint boards) and connecting these to the network fabric 8 of the computing system 100 according to the present invention with the n fabric ports 8a₁₋ₙ. The figure shows only a possible layout of the backplane BK, the physical layout of the computing system 100 having no effect on the concept of the invention. However, the layout depicted on this figure (and also figure 2B) provides a very compact design of the computing system 100 while at the same time allowing good airflow to facilitate cooling

Fig. 1C shows a top view of a backplane BK depicting only one very particular implementation of the ports 8a₁₋ₙ in the form of 32 identical backplane-to-board connectors 20 each of them being divided into a PCI connector 21 used to connect the boards RCB or EB to the network fabric 8, and power connectors 23 for supplying the boards RCB or EB with electrical power. Two brackets 24, 25 are used to support the boards RCB, EB and to aid in correctly plugging into the backplane-to-board connectors 20. Further backplane connectors 22 are used to carry out the PCIe signals dedicated to the IO Fabric.

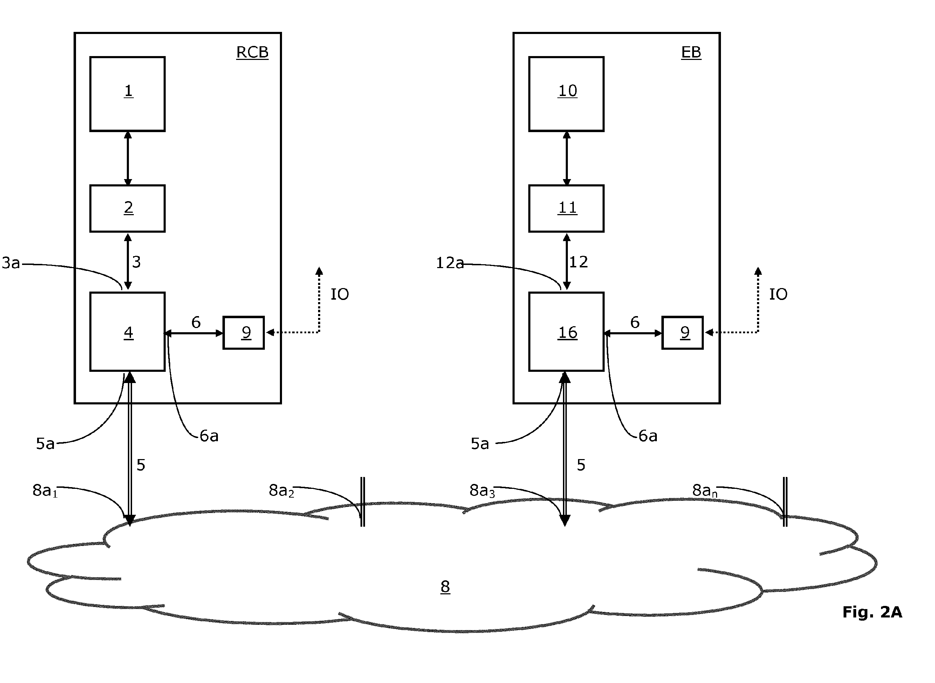

Fig. 2A shows a symbolic block diagram of a first configuration of the computing system 100 according to the present invention.

As shown on this figure, the computing system 100 comprises at least one of each of the two main types of boards connected to the network fabric 8:
- Root Complex board(s) (RCB); and
- Endpoint board(s) (EB).

Each **Root Complex board (s) (RCB)** comprises a first processor 1, such as an x86 based processor for example. In addition, each Root Complex board (s) RCB has a PCIe root complex 2 connected to the first processor 1.

In the context of PCIe systems of the present application, a PCIe root complex 2 is a device that connects the processor and memory subsystems to the PCI Express switch 4, 16 composed of one or more switch devices. Similar to a host bridge in a PCI system, the root complex 2 generates transaction requests on behalf of the processor 1, which is interconnected through a local bus. Root complex functionality may be implemented as a discrete device, or may be integrated with the processor. A root complex may contain more than one PCI Express port and multiple switch devices can be connected to ports on the root complex or cascaded.

Each Root Complex board (s) RCB also comprises a first PCIe network switch 4 directly connected to the PCIe root complex 2. Each PCIe network switch 4 inside the boards is configured in order to have many different communication channels that can be used to realize different type of topology and to connect directly to other network cards used for external communication and for interfacing. In the most preferred embodiment, the PCIe network switch 4 has at least two different type of links connected to two different type of ports. PCIe network switches 4 are capable of creating multiple endpoints out of one endpoint to allow sharing one endpoint with multiple devices.

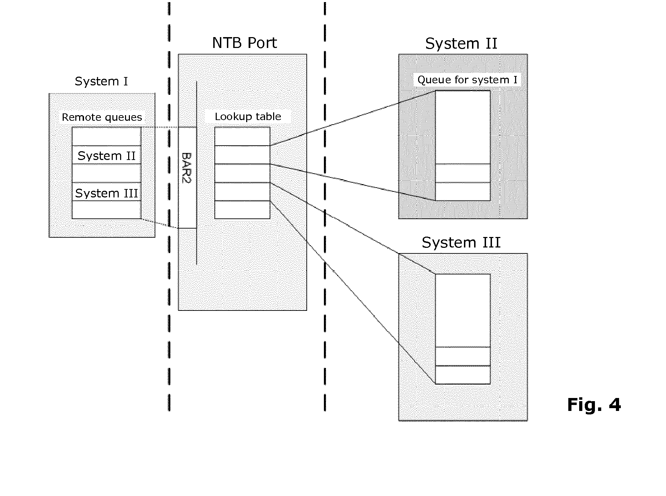

In the preferred embodiment of the invention, the first PCIe network switch 4 is directly connected to the PCIe root complex 2 within the respective Root Complex board RCB through a first main link 3 by a first dedicated port 3a of the first PCIe network switch 4 wherein the first dedicated port 3a and the first main link 3 are configured to perform communication with the first processor 1 via the root complex 2 using non-transparent shared memory operations. One particular implementation for non-transparent shared memory shall be described later in relation with figures 4A and 4B. However the choice of the particular implementation of the non-transparent shared memory does not affect the concept of the invention.

Every **Endpoint board (EB)** comprises a second processor 10, such as a memory controller; a drive controller (e.g. a solid-state drive SSD-controller, a hard drive- controller or a disk array controller) or a network interface controller NIC (e.g. an InfiniBand® controller). The second processor 10 of the Endpoint board(s) is connected to a PCIe interface 11. Each Endpoint board(s) EB further comprises a second PCIe network switch 16 connected to the PCIe interface 11.

In the preferred embodiment of the invention, the second PCIe network switch 16 is directly connected to the PCIe interface 11 within the respective Endpoint Board EB through a second main link 12 by a second dedicated port 12a of the second PCIe network switch 16, wherein the second dedicated port 12a and the second main link 12 are configured to perform communication with the second processor 10 via the PCIe interface 11 using direct-shared memory operations.

The first PCIe network switch(es) 4 of the Root Complex board (s) RCB and the second PCIe network switch(es) 16 of the Endpoint board(s) EB is each connected to the network fabric 8, preferably through at least one switch port 5a of the respective PCIe network switch 4, 16 and at least one corresponding fabric port 8a₁₋ₙ of the network fabric 8 via a corresponding fabric link 5. The fabric link(s) 5 are configured to perform non transparent shared memory operations via the network fabric 8 for inter nodes communications between any Root Complex board RCB and/or Endpoint Board EB.

Furthermore at least one IO-Fabric 9 is provided within at least one board RCB, EB, i.e. at least one IO-Fabric 9 is provided within the hybrid computing system 100 of the present invention, the IO-Fabric 9 providing external communication with the computing system 100. The at least one IO-fabric 9 is connected to the PCIe network switch(es) 4, 16 of the corresponding board(s) RCB, EB via an IO-port(s) 6a of the corresponding PCIe network switch(es) 4, 16 by a corresponding IO-link 6. The IO-Link 6 connecting the PCIe network switch(es) 4, 16 with the at least one IO-fabric 9 is configured for direct communication between the processor(s) 1, 10 and the IO-Fabric 9, wherein the IO-port 6a is configured to perform transparent shared memory communications.

One of the most essential features of the present invention is that each Root Complex board RCB and each Endpoint Board EB are configured for simultaneous use within the hybrid computing system 100. In other words, all boards RCB, EB may be active at the same time to provide parallel capabilities to the computing system 100 allowing different boards to perform different tasks/ subtasks in parallel. However, the term "configured for simultaneous use" does not mean that all boards are necessarily simultaneously used but that the system 100 offers this possibility and each board is in a state where it could be activated regardless of the state of the other boards and that there is no limitation to simultaneous use of any combination of all boards. In this way depending on the specific usage scenario, the computing system 100 may be configured for high degree of parallelism; scalable capacity - where boards with storage are accessed one at a time; or configured for redundancy or any combination in between.

Fig. 2B shows a perspective view of a first configuration of the computing system 100 according to the present invention with a Root Complex board RCB fully inserted into a corresponding backplane connector 20 of a fabric port 8aₙ and an Endpoint board EB about to be inserted into a corresponding backplane connector 20 of a subsequent fabric port 8aₙ₋₁.

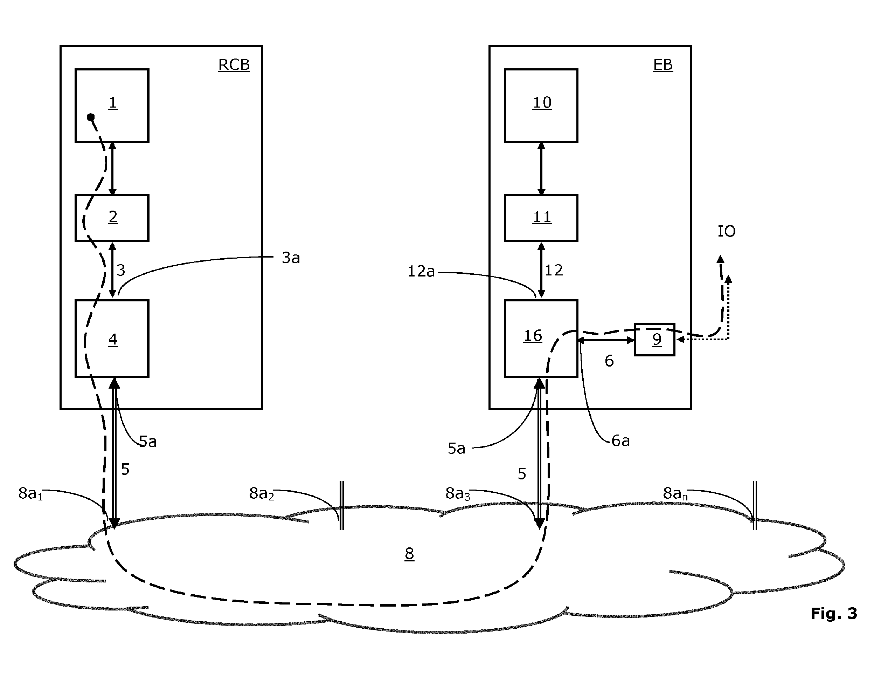

Fig. 3 shows a symbolic block diagram of the communication path (shown with a dashed line) between the processor 1 of one board (RCB in this case) and the IO-Fabric 9 of a different board (EB in the shown illustration) using remote PCIe memory mapping. According to the present invention in order to allow sharing of the at least one IO-Fabric 9 within the entire computing system 100, the PCIe network switches 4, 16 of the corresponding boards RCB, EB, the network fabric 8 and the at least one IO-fabric 9 are configured such that each processor 1, 10 of each board RCB, EB is connectable to the at least one IO-Fabric 9 using remote PCIe memory mapping.

### Non transparent shared memory

In the following, one of the various possible implementations of non transparent shared memory is described:

Each system in the interconnect has a static number that uniquely identifies the system, called the system ID. The address of the queue is programmed into the remote system's lookup table LUT. This is done after the memory addresses are exchanged. Figure 4 depicts the local queue for each remote system. The remote address base address register BAR2 is remapped and then partitioned equally among all the systems. Each partition points to the remote aperture. Figure 4 depicts the remote queues on the local system. The BAR2 lookup table LUT is programmed by the remote system during its local memory initialization. Part of the lookup table entry is the partition number that is used to route the transaction. Furthermore this partition number is used in the ID translation.

The lookup table LUT for both base address registers BARs is configured using the lookup table offset LUTOFFSET, lookup table lower data LUTLDATA, lookup table middle data LUTMDATA and lookup table upper data LUTUDATA registers.
- Fields associated with lookup entries are modified by accessing the LUTLDATA, LUTLMDATA and LUTUDATA registers.
- A read from one of these registers returns the field values of the lookup table entry pointed to by the LUTOFFSET register. Similarly, a write updates the fields of the lookup entry pointed to by the LUTOFFSET register.
- The BAR field in the LUTOFFSET register selects the lookup table associated with the corresponding BAR while the INDEX field in the LUTOFFSET field selects the lookup table entry.
- Address translation for the aperture mapping is done using BAR2 LUT table. Address translation for configuration mapping is done using BAR4 LUT table.
- For each aperture allocated for data transfer, an entry is allocated in the BAR2 LUT table and initialized to the remote address. That entry number is stored in the endpoint EP structure.
- An entry is allocated in BAR4 LUT table to map remote BAR0 configuration space. The entry number is stored in the EP structure.
- Address mapping for RP to EP is different from EP to EP in the current scenario.
- RP to EP aperture mapping is similar to case 1. For instance system III aperture address is set in the LUT entry for BAR2. And system I aperture address is stored in the LUT table for BAR2. The address mapping is the same between system II and system III.
- Address mapping for EP to EP requires two LUT entries to be setup. One entry translates from EP to RP's system space. And the other translates from RPs system space to remote EPs local space. There are two translations to access remote EPs memory from local EP. For instance in order to access system III's aperture from system I, an entry needs to be setup on BAR2 LUT of port 0 on network processor. This translates to BAR2 enumerated address in RP PCIe space. Another entry needs to be setup on the relative BAR2 LUT on remote network processor to translate into system II local memory.

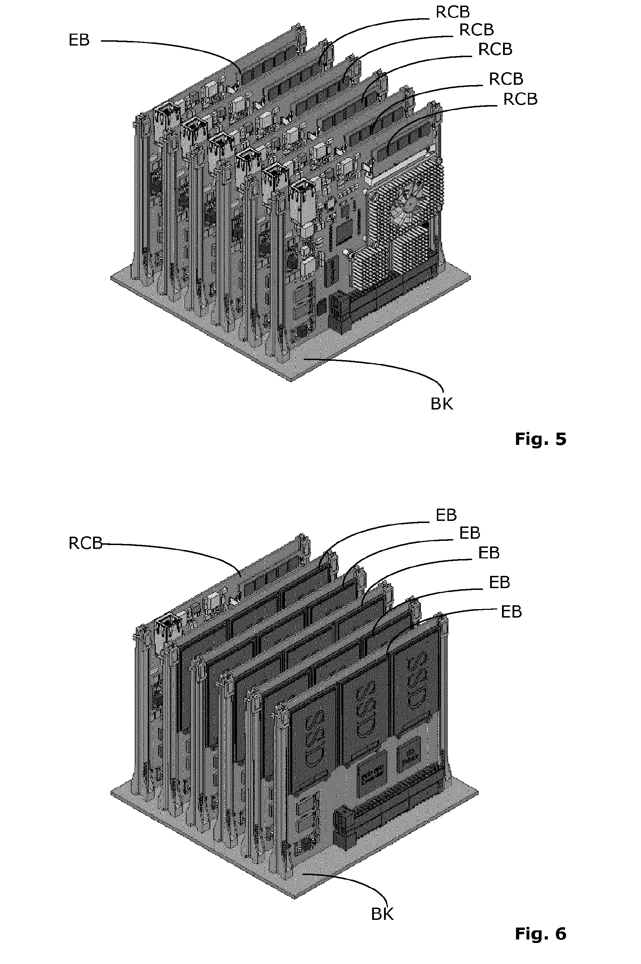

Fig. 5 shows a perspective view of a particular configuration of the computing system 100 according to the present invention, with emphasis on processing power. Therefore preponderantly Root Complex boards RCB with high processing power are connected to the backplane BK.

Fig. 6 shows a perspective view of a further particular configuration of the computing system 100 according to the present invention, with emphasis on storage capacity. For this purpose, preponderantly Endpoint boards EB with multiple solid state drives SSDs and respective controllers are connected to the backplane BK alongside with one Root Complex boards RCB.

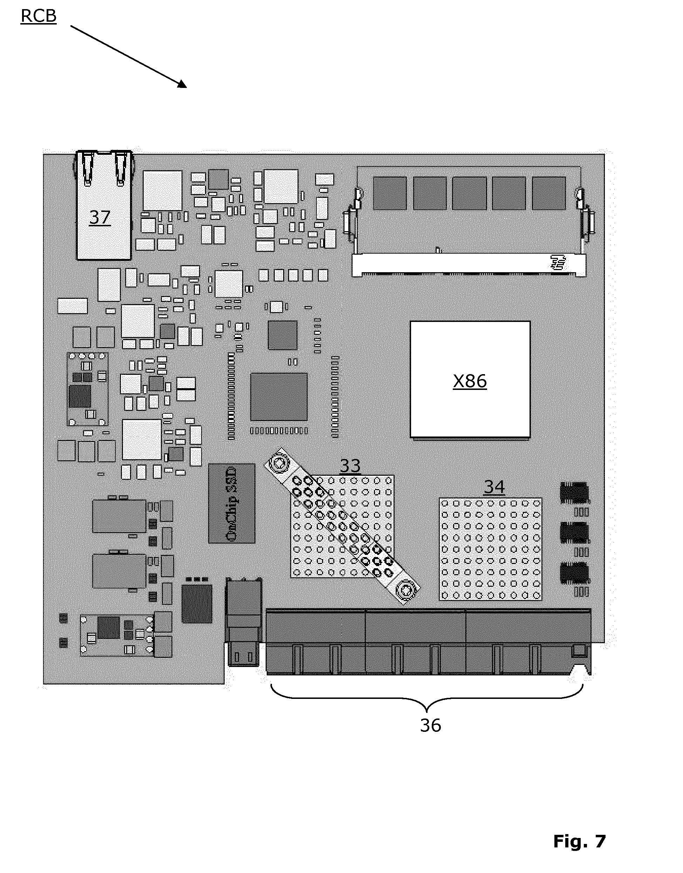

Fig. 7 shows a diagram of a Root Complex Board with an x86 processor as first processor 1. The X86 CPU is connected to its memory 32, its South bridge 33 and to its Network engine 34.

The network engine 34 is connected to the backplane BK using the network connector 36. The network connector 36 is used to carry out from the network processor 34 all the necessary links in order to perform all the connection to the network fabric 8 and the IO fabric 9. A Gigabit ETH interface 37 is used to manage the motherboards in case of necessity.

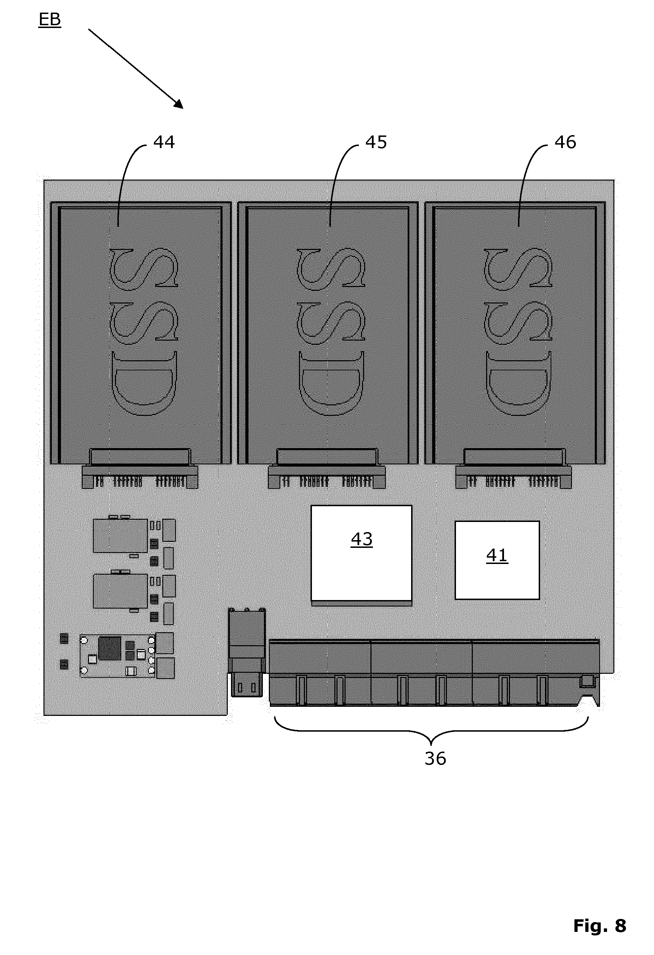

Fig. 8 shows an Endpoint Board EB in a specific configuration of storage cards for SSD storage. The network processor 41 is connected to a PCIe controller 43 that perform all the operations necessary to drive the SSD disks 44, 45, 46.

The network processor 41 is connected to the global backplane BK using the network connector 36.

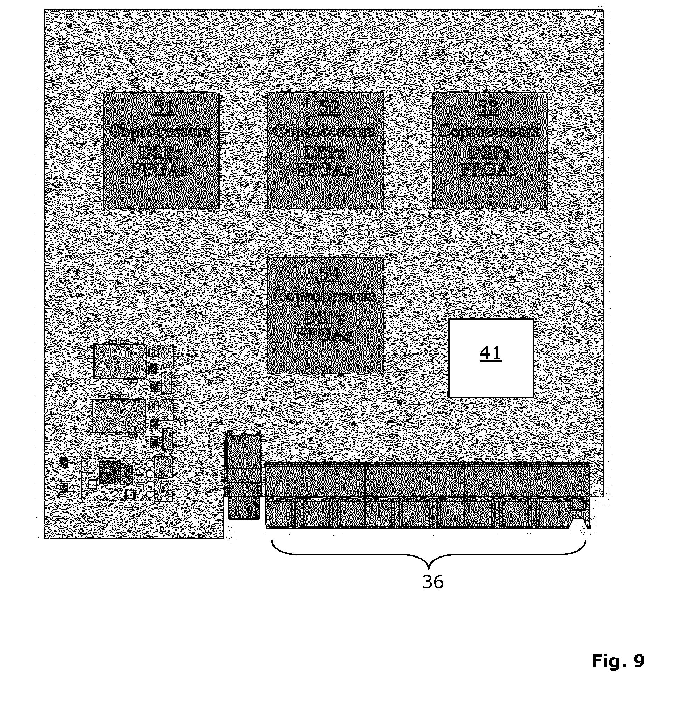

Fig. 9 shows a field-programmable gate array FPGA-based Endpoint Board EB for specific co- processing, in this case the network processor 41 is connected to a PCIe interface realized into an FPGA 54 this FPGA being connected to other FPGAs (51, 52, 53) using different communication mechanisms. The network processor 41 is connected to the global backplane BK using the network connector 36.

The boards - both Root Complex board(s) RCB and Endpoint board(s) EB - presented above can be configured into a hybrid computing system 100 according to the present invention in any combination desired by the specific usage scenario.

It will be understood that many variations could be adopted based on the specific structure hereinbefore described without departing from the scope of the invention as defined in the following claims.

### REFERENCE LIST:

| | |
|---|---|
| hybrid computinq system | 100 |
| network fabric | 8 |
| Root Complex board | RCB |
| first processor | 1 |
| PCIe root complex | 2 |
| first PCIe network switch | 4 |
| Endpoint Board | EB |
| second processor | 10 |
| PCIe interface | 11 |
| second PCIe network switch | 16 |
| dedicated port (of the first PCIe network switch) | 3a |
| first main link | 3 |
| second dedicated port | 12a |
| second main link | 12 |
| fabric port | 8a₁₋ₙ |
| switch port | 5a |
| fabric link | 5 |
| IO fabric | 9 |
| IO-port | 6a |
| IO-Link | 6 |
| backplane | BK |
| backplane-to-board connector | 20 |
| PCI connector | 21 |
| bracket | 24, 25 |
| memory | 32 |
| southbridqe | 33 |
| network engine | 34 |
| network connector | 36 |
| gigabit interface | 37 |
| network processor | 41 |
| PCIe controller | 43 |
| solid state drive SSD | 44,45,46 |

## Claims

1. A hybrid computing system (100) comprising:
- a network fabric (8)
- at least one Root Complex board (RCB) comprising:
- a first processor (1);
- a PCIe root complex (2) connected to the first processor (1);
- a first PCIe network switch (4) directly connected to the PCIe root complex (2);
- at least one Endpoint Board (EB) comprising:
- a second processor (10);
- a PCIe interface (11) connected to the second processor (10);
- a second PCIe network switch (16) connected to the PCIe interface (11);
**wherein:**
- the first PCIe network switch (4) of each Root Complex board (RCB) is connected to the network fabric (8),
- the second PCIe network switch (16) of each Endpoint Board (EB) is connected to the network fabric (8),
- each Root Complex board (RCB) and each Endpoint Board (EB) are configured for simultaneous use within the hybrid computing system (100).

2. A hybrid computing system (100) according to claim 1 **characterized in that:**
- a first dedicated port (3a) of the first PCIe network switch (4) is directly connected to the PCIe root complex (2) within the respective Root Complex board (RCB) through a first main link (3); and
- a second dedicated port (12a) of the second PCIe network switch (16) is directly connected to the PCIe interface (11) within the respective Endpoint Board (EB) through a second main link (12).

3. A hybrid computing system (100) according to claim 2 **characterized in that:**
- the first dedicated port (3a) and the first main link (3) are configured to perform communication with the first processor (1) via the root complex (2) **using non-transparent shared memory operations;** and
- the second dedicated port (12a) and the second main link (12) are configured to perform communication with the second processor (10) via the PCIe interface (11) **using direct-shared memory operations.**

4. A hybrid computing system (100) according to one of the claims 1 to 3 **characterized in that:**
- the PCIe network switch (4, 16) of each board (RCB, EB) is connected to the network fabric (8) through at least one switch port (5a) of the respective PCIe network switch (4, 16) and at least one corresponding fabric port (8a₁₋ₙ) of the network fabric (8) via a corresponding fabric link (5), said fabric link(s) (5) being configured to perform **non transparent shared memory operations** via the network fabric (8) for inter nodes communications between any Root Complex board (RCB) and/or Endpoint Board (EB).

5. A hybrid computing system (100) according to claim 4, **characterized in that** it further comprises a backplane (BK) for receiving said fabric ports (8a₁₋ₙ) corresponding to each board (RCB, EB), wherein the backplane (BK) comprises:
- n backplane-to-board connectors (20) corresponding to each of said fabric ports (8a₁₋ₙ), wherein each backplane-to-board connectors (20) comprises:
- a PCI connector (21) used to connect the boards (RCB, EB) to the network fabric (8), and
- power connectors (23) for supplying the boards (RCB, EB) with electrical power;
- n pairs of brackets (24, 25) to support the boards (RCB, EB) and to aid in correctly plugging the boards (RCB, EB) into the backplane-to-board connectors (20).

6. A hybrid computing system (100) according to one of the previous claims **characterized in that:**
- at least one IO-Fabric (9) is provided within at least one board (RCB, EB);
- said IO-fabric (9) is connected to the PCIe network switch (4, 16) of the corresponding board (RCB, EB) via an IO-port (6a) of the PCIe network switch (4, 16) by a corresponding IO-link (6), said IO-Link (6) being configured for direct communication between the processor (1, 10) and IO-Fabric (9),
- said IO-port (6a) is configured to perform transparent shared memory communications;
- the PCIe network switches (4, 16) of the corresponding boards (RCB, EB), the network fabric (8) and the at least one IO-fabric (9) are configured such that each processor (1, 10) of each board (RCB, EB) is connectable to the at least one IO-Fabric (9) using remote PCIe memory mapping.

7. A hybrid computing system (100) according to one of the previous claims **characterized in that** the network fabric (8) comprises standard PCIe switches, preferably switches compliant with specification of PCI-SIG PCIw gen 2.1.

8. A hybrid computing system (100) according to one of the previous claims **characterized in that** the first processor (1) and/or the second processor (10) is one of the following:
- a central processing unit (CPU) such as a microprocessor;
- a Field-programmable gate array (FPGA);
- an accelerator, such as a graphics processing unit (GPU);
- a Digital signal possessor (DSP);
- a physics processing unit (PPU);
- a front end processor,
- a memory controller;
- a drive controller such as solid-state drive (SSD) controller, a hard drive- controller or a disk array controller; or
- a network interface controller (NIC), such as an InfiniBand controller.

9. A hybrid computing system (100) according to one of the previous claims **characterized in that** the network fabric (8) is a PCIe cluster of one of the following network topologies:
- point-to-point;
- bus;
- sta r;
- ring, preferably a 3D torus;
- mesh; or
- tree.

10. A hybrid computing system (100) according to one of the previous claims **characterized in that** it is configured to receive a number of n (up to 32) boards (1 or 10), the network fabric (8) comprising n fabric ports (8a₁₋ₙ) for receiving any combination of Root Complex boards (RCB) and/or Endpoint Boards (EB) configured for simultaneous use within the hybrid computing system (100).
